# EUROPEAN PATENT APPLICATION

(11) **EP 2 012 204 A2**
(43) Date of publication of application: **07.01.2009**
(21) Application number: 08159539.9
(22) Date of filing: 02.07.2008
(51) Int. Cl.: G05B 19/042, G05B 19/43

(54) **Handle with an integrated digital network communication interface**

(30) Priority: 04.07.2007 IT PR20070050
(71) Applicant: Walvoil S.p.A., 42100 Reggio Emilia (IT)
(72) Inventor: Galeotti, Glauco, 42100, REGGIO EMILIA (IT)
(74) Representative: Leone, Mario

(57) **Abstract**

The present invention relates to the art of manipulators for controlling at least one electrohydraulic and/or mechatronic device. The handle of the present invention is formed of one or more half-shells having one or more sensors with analog outputs and one or more devices with digital outputs mounted thereto. All devices are manually operable by an operator. The handle contains an electronic board that can receive analog and digital input signals from the analog sensors and/or the digital devices, convert them into a signal compatible with digital network-based communication protocols such as CAN-Bus, Lin, TTP or Flex Ray and transmit them to any device that can interface with these communication protocols, such as a network, a controller, an electrohydraulic or mechatronic device.

## Description

The present invention relates to the art of manipulators for controlling at least one electrohydraulic and/or mechatronic device.

Manipulators, that are usually employed for controlling electrohydraulic devices, have analog sensors and/or digital devices mounted to their surface.

Analog sensors may be of various types: tilting or rotary devices, potentiometric strip devices, Hall effect sensors, inductive, capacitive or optical sensors; the digital devices may be include various types of pushbuttons or switches.

These analog sensors and digital switches may be manually operated by an operator and provide an analog or digital output signal according to how they have been actuated.

In various applications the analog or digital output signals from such devices may be usefully converted into digital protocol-based signals (such as CAN-Bus, Lin, TTP or Flex Ray).

Conversion is usually carried out by interface stages located outside the handle.

These interface stages are usually mounted at a certain distance from the handle and are connected thereto via multipolar cables with as many conductors as the number of there are analog or digital signals to be transmitted.

Since tThe output signals from analog sensors, pushbuttons or switches need to shall be carried to the interface stages they and can be affected by external noise (such as electromagnetic interference).

The object of the present invention is to eliminate the need for digital protocol conversion of handle output signals in the external interface stages, by providing a handle with an integrated electronic board that is capable of receiving the above analog and digital input signals and providing an output signal with the desired digital communication protocol.

Therefore, the external interface stagesdevice shall no longer have to acquire signals from the analog sensors and/or the digital devices of the handle, and the number of output poles of the latter does no longer depend on the number of signals to be converted.

This solution leads to less complex wiring and simplified electronics in the external interface stages with which the handle is connected.

Furthermore, transmission of signals converted into digital protocol-based signals from the handle is more reliable, due to a lower influence from external noise.

A further advantage of the present invention is that the integrated electronic board within the handle may be programmed to provide an output based on various digital communication protocols: CAN-Bus (e.g. 2.0A, 2.0B, SAEJ1939, ISO-Bus, CANOpen, etc.), Lin, TTP or Flex Ray; therefore, compatibility is ensured with any device that can interface with such communication protocols.

The devices with which the handle of the invention can interface may be of various types: digital networks, electronic controllers, electrohydraulic or electromechanical devices, othermore handles with integrated communication interfaces within the same network, etc.

These objects and advantages are achieved by the handle of the present invention, which is characterized as set out in the annexed claims.

This and other features will be more apparent from the following description of a few embodiments, which are shown by way of example and without limitation in the accompanying drawings, in which:
- Fig. 1 shows a block diagram of the electronic board integrated in the handle of the present invention;
- Fig. 2 is a sectional view of the handle with integrated electronic board of the present invention;
- Fig. 3 is a schematic view of the handle of the present invention, as used for controlling a skid steer loader-mounted mechatronic device;
- Fig. 4 is a schematic view of the handle of the present invention, as used for controlling a telescopic arm-mounted mechatronic device;
- Fig. 5 is a schematic view of the handle of the present invention, as used for controlling a telescopic arm-mounted controller;
- Fig. 6 is a schematic view of the handle of the present invention, as used for controlling a controller and interfaced with a joystick connected to the same digital network;
- Fig. 7 is a schematic view of the handle of the present invention, as used for controlling electrohydraulic modules mounted to a directional control diverter valve.

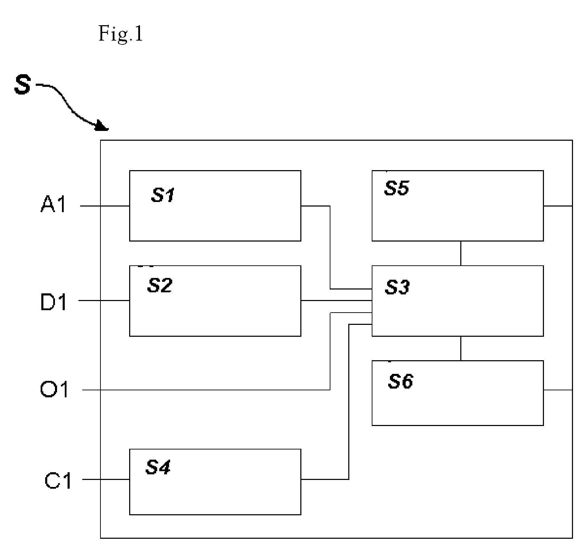

Referring to Fig. 1, the operation of the electronic board is shown by a block diagram.

The integrated electronic board S within the handle is composed of the following macro-components: analog interface circuits S1, digital interface circuits S2, a microprocessor S3, a digital communication circuit S4, a programming circuit S5, a power supply S6 and digital outputs O1.

The analog interface circuits S1 acquire output signals A1 from the analog sensors, whereas the digital interface circuits S2 acquire the output signals D1 from the digital devices.

The signals so acquired are processed by a microprocessor stage S3 which converts themn into a signal C1 ofbased on the desired protocol.

The output signal from the microprocessor stage S3 is converted by the communication circuit S4 into a digital signal C1 ofbased on the desired protocol.

A programming circuit S5 is provided, to define actuation logics or change communication protocols, and allows the microprocessor S3 to be programmed with the desired software.

A power supply stage S6 is provided, for energizing the electronic board S.

Digital outputs O1 are also provided, which can be used for the operator interface, such as for diagnostic signaling or safety featurefunctions: system ON, battery warnings, proper communication signals, integrity and validity signals, emergency signals.

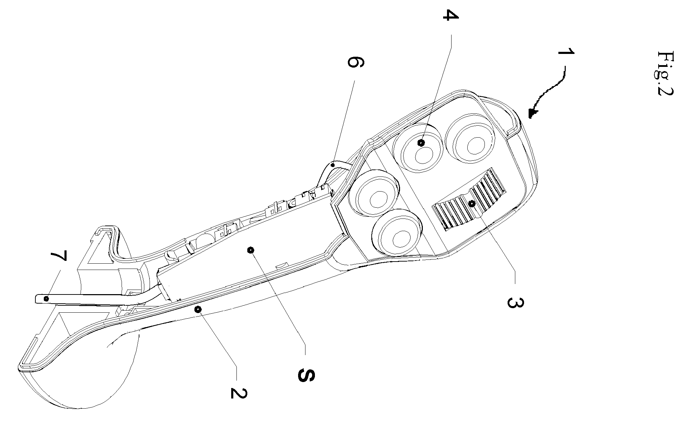

The electronic board S is mounted in the handle, as better shown in Figure 2.

The handle 1 comprises the following components: a shell 2, one or more analog sensors 3, one or more digital devices 4, an electronic board S, cables 6 and 7.

The analog sensors 3 and the digital devices 4 are usually mounted to the outer surface of the shell 2, and can be manually actuated by the operator that uses the handle 1.

The analog sensors 3 may be of various types: tilting or rotary devices, potentiometric strip devices, Hall effect sensors, inductive, capacitive or optical sensors; they can also have a variable voltage or current output.

The digital devices 4 may beinclude pushbuttons or switches.

The electronic board S is mounted in the shell 2 and is connected to the analog sensors 3 and the digital devices 4 via cables 6 through which it receives the input signals generated by these devices (A1 signal from analog sensors 3, D1 signal from digital devices 4).

The electronic board S converts the analog and/or digital input signals A1 and/or D1 it receives through the cables 6 into a digital protocol-based signal which is transmitted at the output via a cable 7.

The handle 1 with integrated electronic board S may be used alone or mounted to various devices (such as hydraulic servocontrols, analog joysticks, levers for direct directional controldiverter valve spool actuation, etc.) and may transmit the signal to controllers, electrohydraulic devices, mechatronic devices, digital networks or othermore handles with integrated communication interface within the same network.

Various applications may be envisaged in the fields of agricultural machines, earth-moving machines, hoisting lifting equipment.

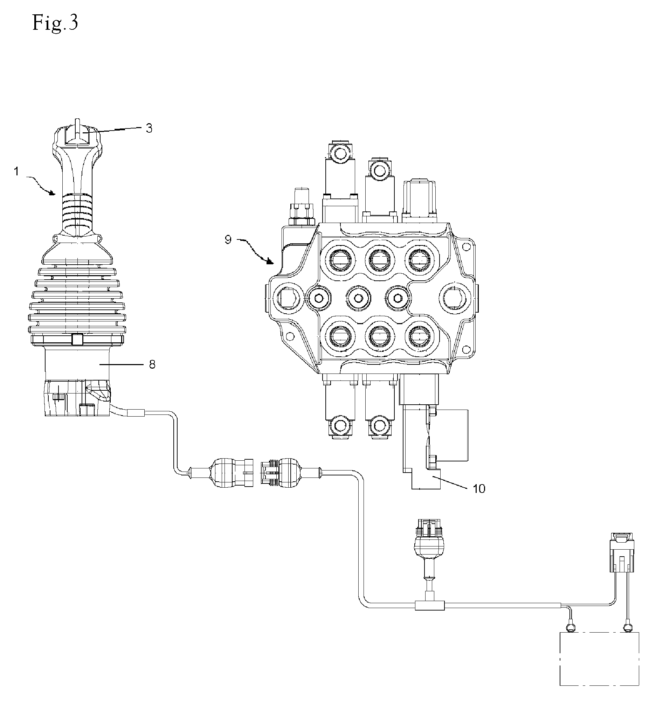

Referring to Figs. 3 - 4 - 5 - 6 - 7 possible applications of the handle with integrated electronic board of the present invention are shown.

These applications are mentioned by way of exampleillustration and without limitation to the possible applications of the handle.

Referring to Fig. 3, the operation of the handle of the present invention is described with reference to the use thereof for controlling a skid steer loader-mounted mechatronic device.

In this application, the handle 1 with integrated electronic board S is controlled by an analog sensor 3 and is mounted to a hydraulic servocontrol 8.

The hydraulic servocontrol 8 allows remote operation of a directional controldiverter valve 9 having hydraulic control sections and mechatronic control sections.

The signal from the analog sensor 3 is convertedtranslated by the electronic board S into a digital protocol-based signal and transmitted to the mechatronic module 10 over the bus.

The mechatronic module 10 converts the digital protocol-based signal received at its input into a power control which controls the position of the directional controldiverter valve spool and hence oil flow to the point of use and control speed.

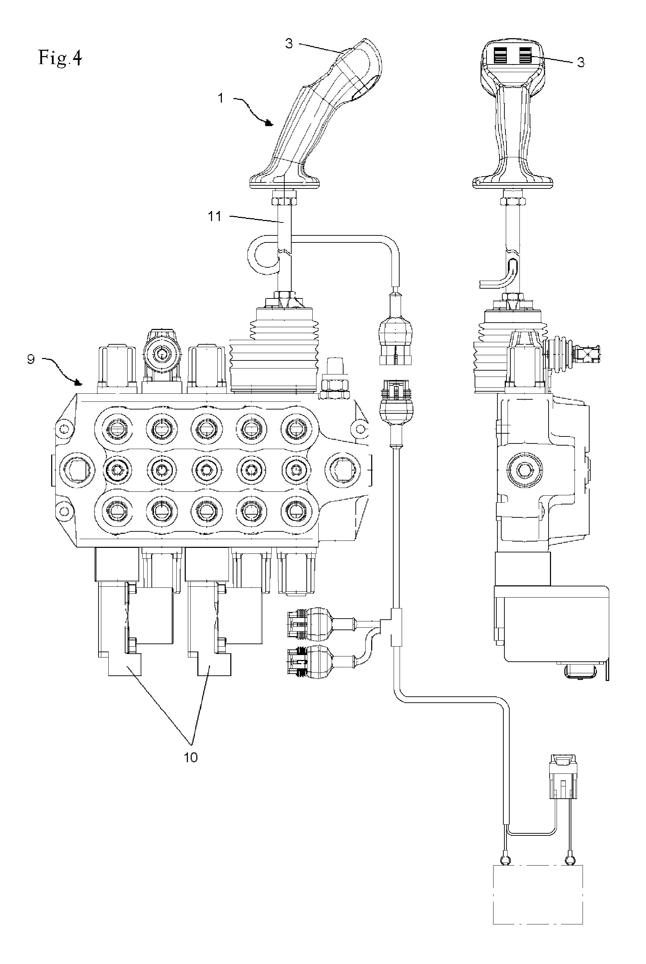

Referring to Fig. 4, the operation of the handle of the present invention is described with reference to the use thereof for controlling a telescopic arm-mounted mechatronic device.

In this application, the handle 1 with integrated electronic board S is controlled by analog sensors 3 and mechanically connected to spools of the directional control diverter valve 9 via a mechanical lever 11.

The mechanical lever 11 mechanically controls the spools of the sections of the directional controldiverter valve 9 with which it is connected, and the mechatronic modules 10 control the spools of the remaining sections.

The outputs from the analog sensors 3 are acquired by the electronic board S and converted into a digital protocol-based signal which is transmitted to the mechatronic modules 10.

The mechatronic modules 10 convert the input signal into a power control for directional controldiverter valve spool position control.

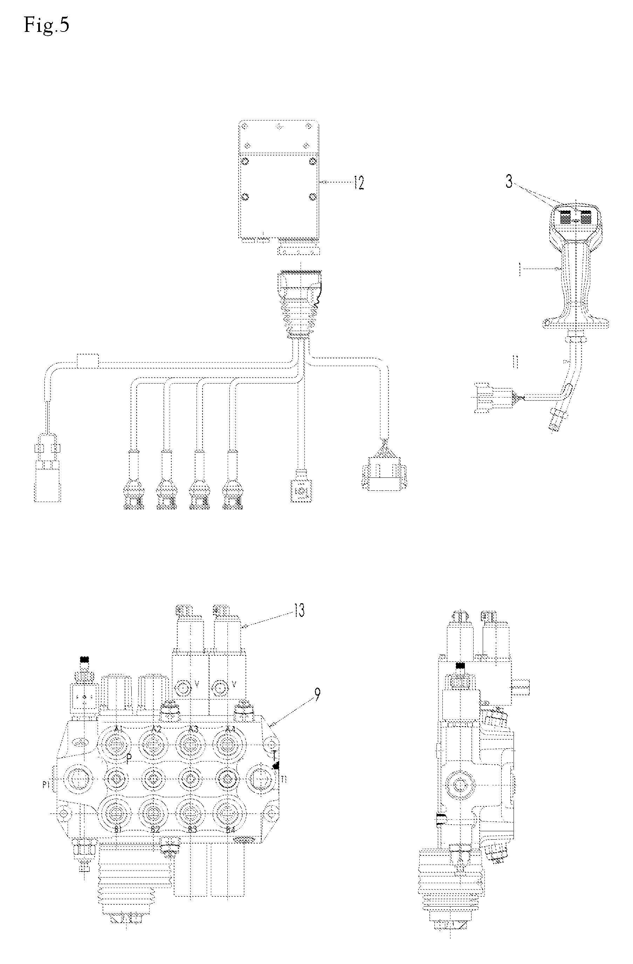

Referring to Fig. 5, the operation of the handle of the present invention is described with reference to the use thereof for controlling a telescopic arm-mounted controller.

In this application, the handle 1 with integrated electronic board S is controlled by analog sensors 3 and mechanically connected to the spools of the first sections of the directional controldiverter valve 9 via a mechanical lever 11.

The lever 11 mechanically controls the spools of the diverterdirectional control valve 9 with which it is connected, whereas the remaining sections of the diverterdirectional control valve 9 are controlled via a controller 12 which controls the proportional solenoids 13 mounted to these sections.

The analog sensors 3 control an auxiliary functionfeature and the telescopic extension.

The outputs from the analog sensors 3 are acquired by the electronic board S and converted into a digital protocol-based signal which is transmitted to the controller 12 over the bus.

The controller 12 converts the digital protocol-based input signal into a PWM signal, wherefore voltage is modulated and used for controlling current in the proportional solenoids 13.

This provides control on the position of the spools of the diverterdirectional control valve 9, as well as on oil flow to points of use and motion speed.

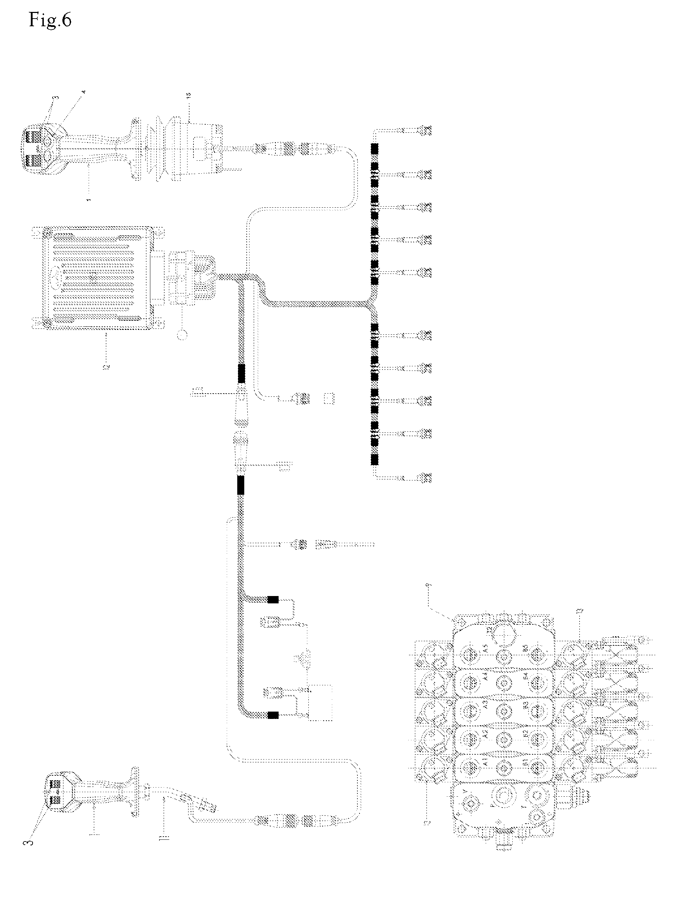

Referring to Fig. 6, the operation of the handle of the present invention is described with reference to the use thereof for controlling a controller and a joystick connected to the same digital network.

In this application, the handle 1 with integrated electronic board S is controlled by analog sensors 3.

The controller 12 is used for controlling the solenoids 13 mounted to the diverterdirectional control valve 9.

The outputs from the analog sensors 3 are acquired by the electronic board S and converted into a digital protocol-based signal which is transmitted to the controller 12 over the bus.

The controller 12 converts the digital input signal into a PWM signal, in which voltage is modulated and used for controlling current in the proportional solenoids 13.

This provides control on the position of the spools of the diverterdirectional control valve 9 and hence on machine motion, because the displacement of the spools and the resulting amount of oil transferred to the cylinders of the various tools is proportional to the current received by the proportional solenoids 13.

More devices may be connected to the digital network of the controller 12, such as joysticks 15, displays and sensors (not shown).

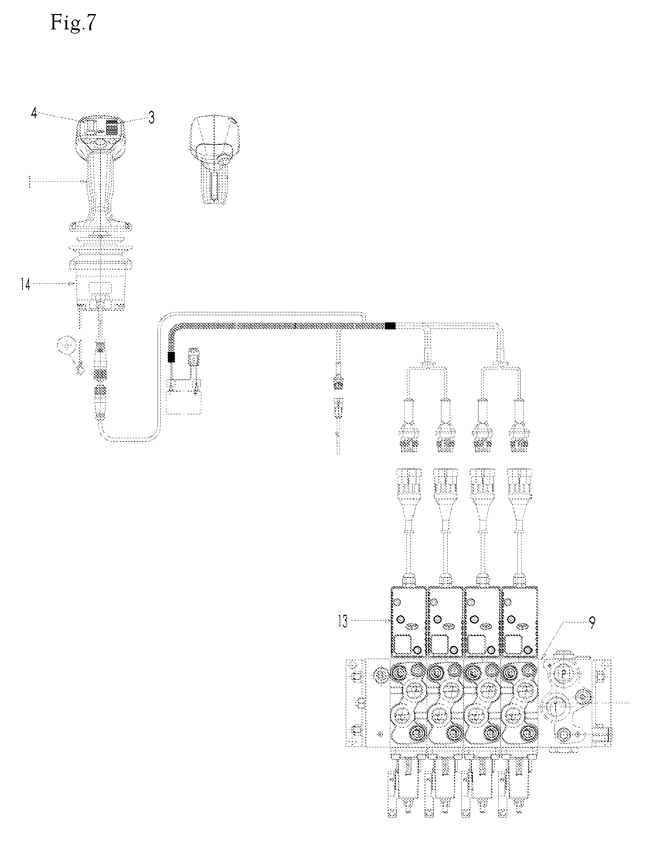

Referring to Fig. 7, the operation of the handle of the present invention is described with reference to the use thereof for controlling electrohydraulic modules mounted to a diverterdirectional control valve.

In this application, the handle 1 with integrated electronic board S is controlled by analog sensors 3 and digital devices 4 and is mounted to an analog joystick 14.

The analog sensors 3 and digital devices 4 sensors are used to control two sections of the diverterdirectional control valve 9, whereas the X axis and the Y axis of the analog joystick 14 are used to control the other two sections.

The outputs from the analog joystick 14, the analog sensors 3 and the digital devices 4 are acquired by the electronic board S and converted into a digital protocol-based signal which is directly transmitted to the electrohydraulic modules 13 over the bus.

The electrohydraulic modules 13 convert the digital input signal into a PWM signal, in which voltage is modulated and used for controlling current in the proportional solenoids located therein.

This provides control on the position of the spools of the diverterdirectional control valve 9 and hence on machine motion, because the displacement of the spools and the resulting amount of oil transferred to the cylinders of the various tools is proportional to the current received by the proportional solenoids.

The movements of the sections controlled by the analog sensors 3 and the axes of the analog joystick 14 are proportional to the output signal from the sensor 3 and the joystick 14; the movements of the section controlled by the digital device 4 are not proportional.

It will be appreciated that the integration of the electronic board S in the analog joystick 14 allows conversion of the analog joystick 14 itself into a joystick based on the desired digital protocol, to be used for any application that uses a digital network of the same type.

## Claims

1. A handle (1) for controlling at least one electrohydraulic and/or mechatronic device, comprising a shell (2), with one or more analog sensors (3) and/or digital devices (4) mounted thereto, for manual operation by an operator, and having an integrated electronic board (S) therein, **characterized in that** the electronic board (S) acquires analog input signals (A1) from the analog sensors (3) and digital signals (D1) from the digital devices (4), converts them into a digital network-based signal (C1) and transmits them to any device that can interface with such communication protocol.

2. A handle (1) as claimed in claim 1, **characterized in that** the electronic board (S) has a programming circuit (S5) which allows it to be programmed for providing a digital output signal (C1) based on any desired communication protocol.

3. A handle (1) as claimed in claim 1, **characterized in that** the electronic board (S) has digital outputs (01) for diagnostic signaling and safety featurefunctions.

4. A handle (1) as claimed in claim 1, **characterized in that** the output signal (C1) from the electronic board (S) may be transmitted to various devices such as controllers, electrohydraulic devices, mechatronic devices or digital networks.

5. A handle (1) as claimed in claim 1, **characterized in that** it can be used alone or be mounted to various devices, such as hydraulic servocontrols (8), analog joysticks (14) and mechanical levers (11) connected to the spools of a diverterdirectional control valve (9).

6. A handle (1) as claimed in claims 1 and 8, **characterized in that** the electronic board (S), when used with an analog joystick (14), allows conversion of such joystick into a digital protocol-based joystick.
